(19) Europäisches Patentamt
European Patent Office
Office européen des brevets

(11) **EP 2 811 684 A1**

(12) **EUROPEAN PATENT APPLICATION**
published in accordance with Art. 153(4) EPC

(43) Date of publication:
**10.12.2014 Bulletin 2014/50**

(51) Int Cl.:
**H04L 7/033** (2006.01)   **H04L 7/00** (2006.01)

(21) Application number: **13743038.5**

(22) Date of filing: **23.01.2013**

(86) International application number:
**PCT/JP2013/051237**

(87) International publication number:
**WO 2013/115016 (08.08.2013 Gazette 2013/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **30.01.2012   JP 2012016548**

(71) Applicant: **Sony Corporation
Tokyo 108-0075 (JP)**

(72) Inventors:
• **MATSUNAGA Osamu
Tokyo 108-0075 (JP)**
• **INOMATA Naoki
Tokyo 108-0075 (JP)**
• **KANADA Mizuki
Tokyo 108-0075 (JP)**

(74) Representative: **DeVile, Jonathan Mark et al
D Young & Co LLP
120 Holborn
London EC1N 2DY (GB)**

(54) **SYNCHRONIZATION PROCESSING DEVICE, SYNCHRONIZATION PROCESSING METHOD, AND PROGRAM**

(57) The present technology relates to a synchronization processing device, a synchronization processing method, and a program, which make it possible to achieve frequency synchronization in a shorter period of time. A jitter amount calculation unit calculates a jitter amount on the basis of a synchronization packet containing time information. A jitter amount accumulation unit calculates a cumulative value of the jitter amount calculated by the jitter amount calculation unit. A comparison unit outputs a frequency error correction value from the calculated cumulative value of the jitter amount. A control voltage generation unit outputs a frequency control voltage based on the frequency error correction value. The present technology can be applied to a receiver device that is time-synchronized with a transmission device, for example.

**FIG. 2**

EP 2 811 684 A1

**Description**

Technical Field

The present technology relates to a synchronization processing device, a synchronization processing method, and a program. Specifically, it relates to a synchronization processing device, a synchronization processing method, and a program, which make it possible to achieve frequency synchronization in a shorter period of time.

Background Art

A receiver device is known that is time-synchronized with a transmission device by utilizing a synchronization packet to be sent from the transmission device and containing time information on the transmitting side (Patent Literature 1, 2).

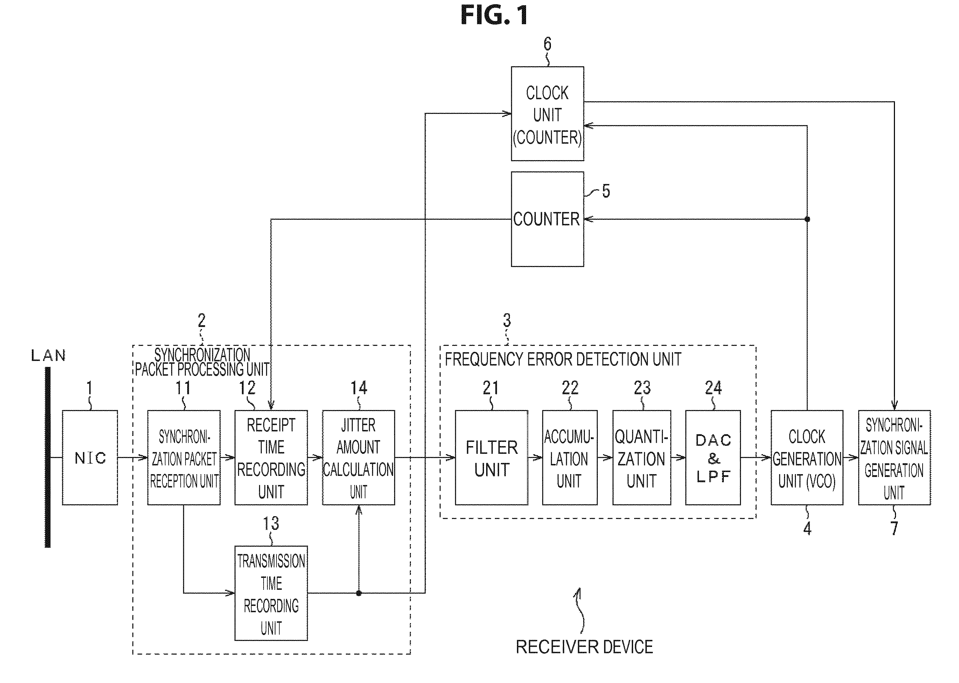

FIG. 1 shows an example of a conventional configuration of a receiver device that is time-synchronized with a transmission device. Note that the receiver device of FIG. 1 represents a configuration of a part involved in synchronization processing of an overall configuration of the receiver device and can be considered, so to speak, a configuration of a synchronization processing device.

The receiver device of FIG. 1 consists of an NIC (Network Interface Card) 1, a synchronization packet processing unit 2, a frequency error detection unit 3, a clock generation unit 4, a counter 5, a clock unit 6, and a synchronization signal generation unit 7.

The NIC 1 is connected to a LAN (Local Area Network), which is an asynchronous network, receives a packet addressed to the NIC 1, and outputs the packet to a subsequent stage. When receiving a synchronization packet from the transmission device, the NIC 1 outputs the received synchronization packet to the synchronization processing unit 2. The synchronization packet contains transmission time information indicating time (transmission time) when the transmission device outputted that synchronization packet.

The synchronization packet processing unit 2 consists of a synchronization packet reception unit 11, a receipt time recording unit 12, a transmission time recording unit 13, and a jitter amount calculation unit 14.

The synchronization packet reception unit 11 acquires (receives) a synchronization packet to be supplied from the NIC 1, and outputs the synchronization packet to the receipt time recording unit 12 and the transmission time recoding unit 13.

The receipt time recording unit 12 records, as reception time, a count value of the counter 5 at the time when the synchronization packet is received by the synchronization packet reception unit 11. The transmission time recording unit 13 extracts and records transmission time contained in the synchronization packet supplied from the synchronization packet reception unit 11. The receipt time recording unit 12 records (holds) receipt time of when last two synchronization packets were received, while the transmission time recording unit 13 records (holds) transmission time of last two synchronization packets.

The jitter amount calculation unit 14 calculates a jitter amount on the basis of receipt time and transmission time of two adjacent synchronization packets that are recorded in the receipt time recording unit 12 and the transmission time recording unit 13. Specifically, the jitter amount calculation unit 14 calculates, as a jitter amount, a difference between a first difference, which is a difference in receipt time, and a second difference, which is a difference in transmission time of the two adjacent synchronization packets.

To be specific, making receipt time and transmission time of a synchronization packet t(a) and s(a), and receipt time and transmission time of a synchronization packet following it t(b) and s(b), the jitter amount calculation unit calculates a jitter amount with the following expression:

$$\text{Jitter amount} = (t(b)-t(a)) - (s(b)-s(a)) \qquad (1)$$

In the expression 1, a and b in parentheses represent sample numbers of synchronization packets. A jitter amount to be determined here corresponds to a clock frequency error between the transmitting side and the receiving side, under the condition that the jitter amount is not affected by variations in delay time of the synchronization packet over a network. In addition, under the condition that the jitter amount is affected by variations in delay time of the synchronization packet over the network, the jitter amount corresponds to a composite of a clock frequency error and effect of the variations in the delay time.

The frequency error detection unit 3 consists of a filter unit 21, an accumulation unit 22, a quantization unit 23, and a DAC&LPF24.

A jitter amount calculated by the jitter amount calculation unit 14 is supplied to the filter unit 21. The filter unit 21 performs filtering, such as a smoothing filter, which removes noise in the supplied jitter amount. The filter unit 21 outputs to the accumulation unit 22 the jitter amount after the noise has been removed therefrom.

The accumulation unit 22 accumulates outputs from the filter unit 21, and outputs accumulation results to the quantization unit 23. The accumulation unit 22 has a function to hold a control voltage when jitter = 0.

The quantization unit 23 quantizes output of the accumulation unit 22. The DAC&LPF 24 D/A converts a quantized value, which is a quantum result by the quantization unit 23, and further subjects it to low-pass filtering. Output from the DAC&LPF 24 is a VCO control voltage (signal) for controlling correction of a frequency error.

The clock generation unit 4 produces (generates) clock CLK of a predetermined frequency (clock frequency) on the basis of the VCO control voltage from the frequency error detection unit 3, and outputs the clock CLK to the counter unit 5, the clock unit 6, the synchronization signal generation unit 7 and the like. The clock generation unit 4 consists of, for example, a crystal oscillator of voltage variable type, such as VCXO and the like.

The counter 5 counts a clock value on the basis of clock CLK to be generated in the clock generation unit 4. The count value of the counter 5 is supplied to the receipt time recording unit 12 of the synchronization packet processing unit 2.

The clock unit 6 counts a clock value based on clock CLK to be generated in the clock generation unit 4. After frequency synchronization, the count value of the clock unit 6 is rewritten to transmission time to be supplied from the transmission time recording unit 13 and supplied to the synchronization signal generation unit 7 as time information.

The synchronization signal generation unit 7 generates a synchronization signal based on clock CLK to be supplied from the clock generation unit 4, and supplies the synchronization signal to respective unis in the receiver device. The time information from the clock unit 6 is utilized to put synchronization signals on the receiving side and the transmitting side in the same phase.

Synchronization processing by the receiver device of FIG. 1 will be described briefly.

First, in the synchronization packet processing unit 2, a jitter amount is calculated with the expression (1). Then, in the frequency error detection unit 3, noise is removed from the calculated jitter amount to generate a VCO control voltage for correcting a frequency error and the VCO control voltage is supplied to the clock generation unit 4. The clock generation unit 4 corrects a frequency error of clock frequency by generating clock CLK on the basis of the VCO control voltage. The clock CLK of the corrected clock frequency is supplied to the counter 5, and made a reference of count values when the reception time recording unit 12 records receipt time. Thus, a frequency lock loop circuit consists of the receipt time recording unit 12, the jitter amount calculation unit 14, the frequency error detection unit 3, the clock generation unit 4, and the counter 5.

A synchronization judgment unit of the receiver device, which is not shown, judges whether or not frequency synchronization has been established. If it is determined as a result of execution of the frequency lock loop control as described above for a predetermined period of time that the frequency synchronization has been established, the synchronization judgment unit allows the clock unit 6 to rewrite a count value based on transmission time of a synchronization packet to be supplied from the transmission time recording unit 13. When the clock unit 6 is allowed to rewrite the count value, it starts rewriting of the count value and outputs the count value after being rewritten to the synchronization signal generation unit 7.

Citation List

Patent Literature

Patent Literature 1: JP 2004-304809A
Patent Literature 2: JP 2010-232845A

Summary of Invention

Technical Problem

In the frequency synchronization control processing as described above, precision and entrainment time of frequency synchronization heavily relies on filter characteristics of the filter unit 21 for removing noise from a jitter amount. Since a jitter amount is generated due to dispersion in arrival delay time of synchronization packets that occur in a LAN, the jitter amount widely varies depending on a network topology, performance of switches constituting a network, or traffic conditions. Since a frequency error remains when noise cannot be removed completely, it is better to increase the number of filter stages in the filter unit 21 given that as much noise as possible should be removed. However, since the increased number of filter stages results in longer entrainment time, a restriction on the entrainment time, if it is present in a standard and the like, may not be possibly satisfied.

The present technology has been made in view of such circumstances and enables frequency synchronization to be achieved in a shorter period of time.

Solution to Problem

According to an embodiment of the present disclosure, there is provided a synchronization processing device including a jitter amount calculation unit for calculating a jitter amount on the basis of a synchronization packet containing time information, an accumulation unit for calculating a cumulative value of the jitter amount calculated by the jitter amount calculation unit, a frequency error correction unit for outputting a frequency error correction value from the cumulative value of the jitter amount calculated by the accumulation unit, and a control voltage output unit for outputting a frequency control voltage based on the frequency error correction value.

According to an embodiment of the present disclosure, there is provided a synchronization processing method including the steps, performed by a synchronization processing device, of calculating a jitter amount on the basis of a synchronization packet containing time information, calculating a cumulative value of the calculated jitter amount, outputting a frequency error correction value from the cumulative value of the calculated jitter amount, and outputting a frequency control voltage based on the frequency error correction value.

According to an embodiment of the present disclosure, there is provided a program for causing a computer to function as a jitter amount calculation unit for calculating a jitter amount on the basis of a synchronization packet containing time information, an accumulation unit for calculating a cumulative value of the jitter amount calculated by the jitter amount calculation unit, a frequency error correction unit for outputting a frequency error correction value from the cumulative value of the jitter amount calculated by the accumulation unit, and a control voltage output unit for outputting a frequency control voltage based on the frequency error correction value.

In one aspect of the present technology, a jitter amount is calculated on the basis of a synchronization packet containing time information, a cumulative value of the calculated jitter amount is calculated, a frequency error correction value is outputted from the cumulative value of the calculated jitter amount, and a frequency control voltage based on the frequency error correction value is outputted.

A synchronization processing device may be an independent device or internal blocks constituting one device.

Advantageous Effects of Invention

According to one aspect of the present technology, frequency synchronization can be achieved in a shorter period of time.

Brief Description of Drawings

[FIG. 1] FIG. 1 is a block diagram showing a configuration of a conventional receiver device.

[FIG. 2] FIG. 2 is a block diagram showing a configuration example of a first embodiment of a receiver device to which the present technology is applied.

[FIG. 3] FIG. 3 is an illustration describing a relationship of a jitter cumulative value and arrival delay time.

[FIG. 4] FIG. 4 is an illustration describing a relationship of a jitter cumulative value and arrival delay time.

[FIG. 5] FIG. 5 is an illustration showing an example of operation of a frequency error detection unit of the first embodiment.

[FIG. 6] FIG. 6 is a flow chart illustrating frequency synchronization control processing by the first embodiment.

[FIG. 7] FIG. 7 is a block diagram showing a configuration example of a second embodiment of a receiver device to which the present technology is applied.

[FIG. 8] FIG. 8 is an illustration showing an example of operation of a frequency error detection unit of the second embodiment.

[FIG. 9] FIG. 9 is an illustration describing a difference in settings of an upper limit DH and a lower limit DL of the first embodiment and the second embodiment.

[FIG. 10] FIG. 10 is a flow chart illustrating frequency synchronization control processing according to the second embodiment.

[FIG. 11] FIG. 11 is a block diagram showing a configuration example of a third embodiment of a receiver device to which the present technology is applied.

[FIG. 12] FIG. 12 is an illustration showing an example of operation of a frequency error detection unit of the third embodiment.

[FIG. 13] FIG. 13 is an illustration showing an example of operation of the frequency error detection unit of the third embodiment.

[FIG. 14] FIG. 14 is a flow chart illustrating frequency synchronization control processing according to the third embodiment.

[FIG. 15] FIG. 15 is a block diagram showing a configuration example of one embodiment of a computer to which the present technology is applied.

Description of Embodiments

Hereinafter, illustrative embodiments for carrying out the present technology (hereinafter referred to as embodiments) will be described. Note that descriptions will be given in the following order:

1. First embodiment of a receiver device
2. Second embodiment of a receiver device
3. Third embodiment of a receiver device

(1. First embodiment)

[Configuration block diagram of a receiver device]

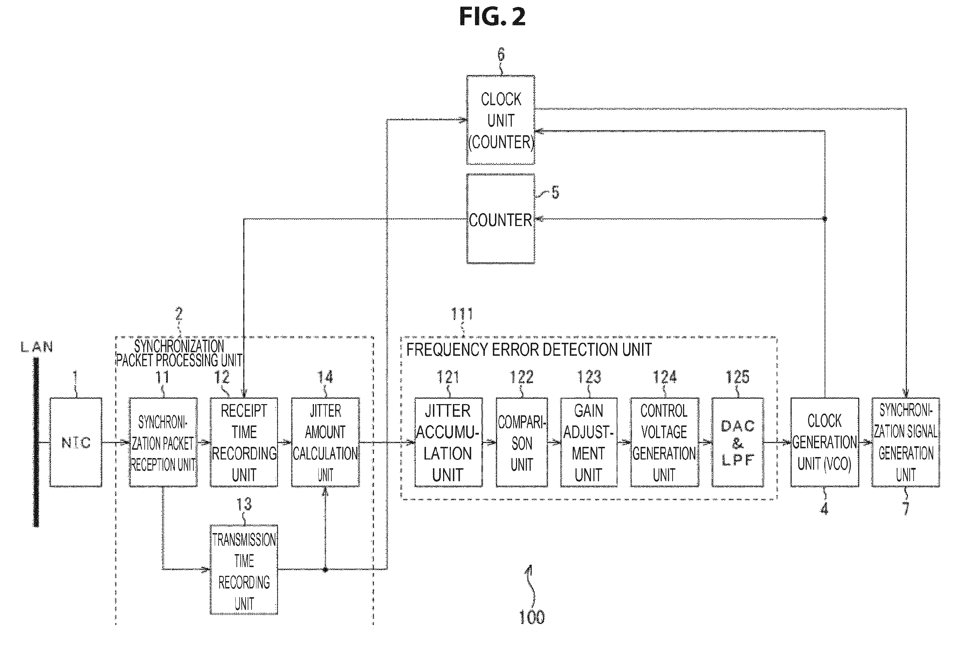

FIG. 2 is a block diagram showing a first embodiment of a receiver device.

Similar to FIG. 1, a receiver device 100 in FIG. 2 represents a configuration of a part involved in synchronization processing of an overall configuration. Identical symbols are assigned to parts in FIG. 2 which correspond to those in FIG. 1 and overlapping descriptions are omitted, as appropriate.

The receiver device 100 of FIG. 2 consists of an NIC 1, a synchronization packet processing unit 2, a frequency error detection unit 111, a clock generation unit 4, a counter 5, a clock unit 6, and a synchronization signal generation unit 7. Specifically, the receiver device 100 is configured similar to the receiver device in FIG. 1, except the frequency error detection unit 111.

The frequency error detection unit 111 consists of a jitter accumulation unit 121, a comparison unit 122, a gain adjustment unit 123, a control voltage generation unit 124, and a DAC&LF 125.

The jitter accumulation unit 121 accumulates jitter amounts sequentially supplied from the jitter amount accumulation unit 14 and outputs jitter cumulative values, which are accumulation results, to the comparison unit 122.

By comparing a jitter cumulative value from the jitter accumulation unit 121 with an upper limit threshold DH (hereinafter referred to as an upper limit DH) and a lower limit threshold value DL (hereinafter referred to as a lower limit DL), the comparison unit 122 judges whether the jitter cumulative value has reached either the upper limit DH or the lower limit DL. Here, reaching either the upper limit DH or the lower limit DL means that the jitter cumulative value is equal to or exceeds the upper limit DH or the lower limit DL. The upper limit DH and the lower limit DL have been set in the comparison unit 122 in advance.

When the jitter cumulative value has reached the upper limit DH, the comparison unit 122 outputs a control value corresponding to the upper limit DH to the gain adjustment unit 123. When the jitter cumulative value has reached the lower limit value DL, the comparison unit 122 outputs a control value corresponding to the lower limit DL to the gain adjustment unit 123. These control values are to serve as a correction value for correcting a frequency error, and the control value corresponding to the upper limit DH and the control value corresponding to the lower limit DL have a different sign. For example, when the control value corresponding to the upper limit DH is "-1", the control value corresponding to the lower limit DL is "+1".

The gain adjustment unit 123 performs gain adjustment that is processing of multiplying a control value, which is output of the comparison unit 122, by predetermined gain. If it is desired to significantly change a VOC control voltage by a control value reaching the upper limit DH or the lower limit DL once, gain is set to a large value. If it is desired to change it a little, the gain is set to a small value. A user can set a gain value of the gain adjustment unit 123 to a desired value by entering it.

The control voltage generation unit 124 generates a VCO control voltage for correcting a frequency error by accumulating control values after gain adjustment, which are output of the gain adjustment unit 12, and outputs the VCO control voltage to the DAC&LPF 125.

Similar to the DAC&LPF 24 in FIG. 1, the DAC&LPF 125 converts a digital VCO control voltage from the control voltage generation unit 124 into an analog signal (D/A conversion), further subjects the VCO control voltage to low-pass filtering, and outputs the VCO control voltage.

If the jitter cumulative value has reached neither the upper limit DH nor the lower limit DL, in other words, if the jitter cumulative value is a value between the upper limit DH and the lower limit DL, nothing is outputted from the comparison unit 122 to the gain adjustment unit 123. Therefore, if the jitter cumulative value has reached neither the upper limit DH nor the lower limit DL, operation of the gain adjustment 123 or the DAC&LPF 125 does not change, and a VCO control voltage, which is same as the last one, is continuously outputted.

[Relationship of a jitter cumulative value and arrival delay time]

In the receiver device 100 in FIG. 2, the frequency error detection 111 calculates a jitter cumulative value and detects whether the computed jitter value has reached either the upper limit DH or the lower limit DL.

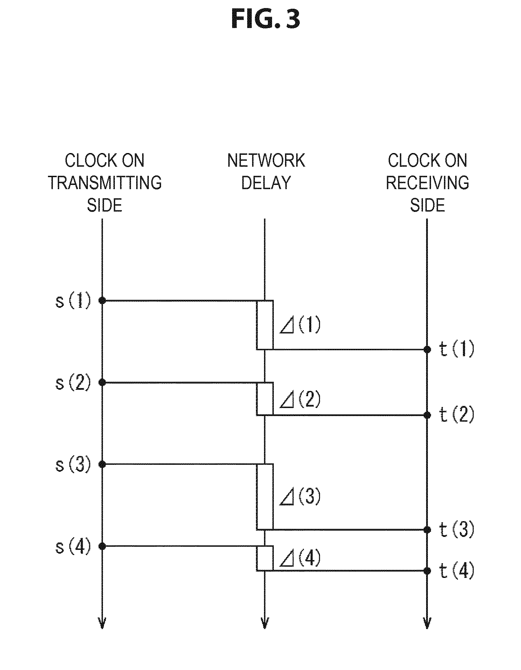

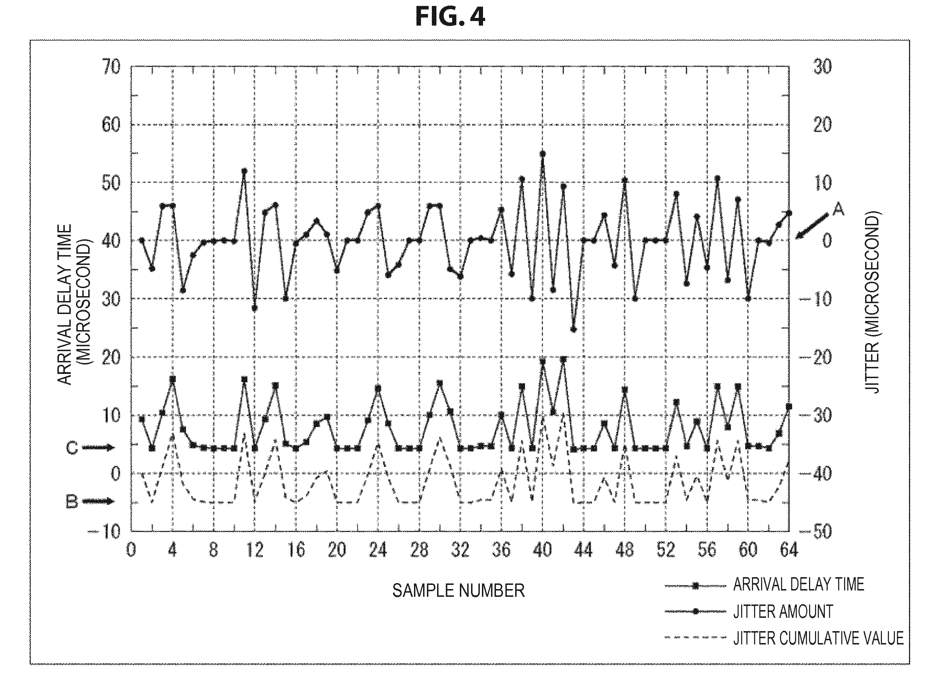

Now, a relationship of a jitter cumulative value and delay time of arrival that occurs over a network (hereinafter referred to as arrival delay time) will be described with reference to FIG. 3 and FIG. 4. Note that while the arrival delay time relies on LAN cable length, a network configuration such as a switch and the like, and size of a synchronization packet, in the following, it is simplified as solely relying on the switch.

Properties of arrival delay time of synchronization packets $\Delta(1)$, $\Delta(2)$,... will be described with reference to FIG. 3. Note that digits in () represent sample numbers of the synchronization packets.

In a network being such configured that synchronization packets and any packets other than them, video signals, for example, are transmitted from a same output port of a switch, transmission of the synchronization packets is directly performed in a moment if it does not overlap with transmission of the other packets. However, if it overlaps with the transmission of the other packets, the transmission of the synchronization packets is postponed, and output waiting time thereof depends on time required for the transmission of the other packets and is not fixed. Accordingly, delay variations expressed by the following expression (2) as well as fixed delay in transit will be observed on the receiving side.

$$t(1)\text{-}s(1) = \Delta(1) + \text{offset}(1)$$
$$t(2)\text{-}s(2) = \Delta(2) + \text{offset}(2)$$
$$t(3)\text{-}s(3) = \Delta(3) + \text{offset}(3)$$
$$t(4)\text{-}s(4) = \Delta(4) + \text{offset}(4)$$
$$\dots$$
$$(2)$$

Since clocks on the transmitting and receiving sides differ both in their count values (= time) and how they progress (= length of one second), offset(1), offset(2), offset(3), offset(4),...take different values. However, if offset(1)≈offset(2)≈offset(3)≈offset(4)≈... is satisfied under certain conditions, the jitter amount expressed by the following expression (3) will be observed on the receiving side. The certain conditions include those such as frequency locking of clock frequency being achieved ahead of time synchronization, or synchronization packets being generated at such short time intervals that a difference in offset of each sample becomes sufficiently small and the like.

$$t(2)\text{-}s(2)\text{-}(t(1)\text{-}s(1)) = \Delta(2)\text{-}\Delta(1)$$
$$t(3)\text{-}s(3)\text{-}(t(2)\text{-}s(2)) = \Delta(3)\text{-}\Delta(2)$$
$$t(4)\text{-}s(4)\text{-}(t(3)\text{-}s(3)) = \Delta(4)\text{-}\Delta(3) \quad \dots$$
$$(3)$$

Cumulatively adding of the jitter amounts expressed by the above expression (3) results in the following expression (4).

$$\{t(2)-s(2)-(t(1)-s(1))\} + \{t(3)-s(3)-(t(2)-s(2))\}$$
$$= \{\Delta(2)-\Delta(1)\} + \{\Delta(3)-\Delta(2)\}$$
$$= \Delta(3)-\Delta(1)$$

$$\{t(2)-s(2)-(t(1)-s(1))\} + \{t(3)-s(3)-(t(2)-s(2))\}$$
$$+ \{t(4)-s(4)-(t(3)-s(3))\}$$
$$= \{\Delta(2)-\Delta(1)\} + \{\Delta(3)-\Delta(2)\} + \{\Delta(4)-\Delta(3)\}$$
$$= \Delta(4)-\Delta(1)$$
$$\dots$$

$$(4)$$

As is obvious from the expression (4), with the cumulative addition of jitter amounts, variations by $\Delta(1)$ can be obtained, as shown by the

$$\sum_{i=2}^{n} \{t(i)-s(i)-(t(i-1)-s(i-1))\}$$

$$= \Delta(n)-\Delta(1) \qquad \cdots (5)$$

FIG. 4 shows a measurement example of a jitter amount, a jitter cumulative value and arrival delay time in a state in which an offset (offset) of clocks on the transmitting side and receiving side is 0.

A jitter amount that can be measured on the receiving side varies on each sample of synchronization packets centering around A = 0 microsecond. A cumulative value obtained by accumulating the jitter amount takes a minimum value B, and varies similar to the arrival delay time that takes a minimum value C. In this example, since B = -5 microseconds and C = approximately +4 microseconds, a jitter cumulative value corrected (shifted) only by + 9 microseconds in all samples is the arrival delay time of each sample.

As stated in the description of FIG. 1, under the condition that a jitter amount to be calculated by the jitter amount calculation unit 14 is affected by variations in the arrival delay time of synchronization packets over the network, the jitter amount corresponds to a composite of effects of clock frequency errors on the transmitting side and the receiving side and arrival delay time variations.

In other words, a jitter cumulative value which is accumulated jitter amounts is divided into a value corresponding to accumulated clock frequency errors on the transmitting and receiving sides and a value corresponding to accumulated arrival delay time. Then, as can be seen from FIG. 4, the value corresponding to accumulated arrival delay time has the property that it remains in a certain range of values.

Therefore, if a state in which the jitter cumulative value exceeds the upper limit DH or the lower limit DL occurs even though the upper limit DH and the lower limit DL corresponding to the range in which the value corresponding to accumulated arrival delay time remains have been set, it is due to the value corresponding to accumulated clock frequency errors on the transmitting side and receiving side.

With the above, if there is a clock frequency error on the transmitting side and receiving side, a state occurs in which a jitter cumulative value computed by the jitter accumulation exceeds the limits of the upper limit DH and the lower limits DL. On the one hand, if there is no clock frequency error on the transmitting side and the receiving side, the jitter cumulative value computed by the jitter accumulation unit 121 does not exceed the limits of the upper limit DH and the lower limit DL.

In other words, if there is no clock frequency error on the transmitting side and the receiving side, the offset (offset) of the clocks on the transmitting side and the receiving side has reached the situation in which offset(1) = offset(2) = offset(3) = offset(4) =...

If there is a clock frequency error on the transmitting side and the receiving side, however, the situation is offset(1)<offset(2)<offset(3)<offset(4)<... or offset(1)>offset(2)>offset(3)>offset(4)>... When the situation of offset(1)<offset(2)<offset(3)<offset(4)<...occurs, the jitter cumulative value computed by the jitter accumulation unit 121 reaches the upper limit DH after predetermined time elapses. In addition, when the situation of offset(1)>offset(2)>offset(3)>offset(4)>... occurs, the jitter cumulative value computed by the jitter accumulation unit 121 reaches the lower limit DL after the predetermined time elapses.

With the above, a clock frequency error can be removed through regulation of a VCO control voltage so that a situation occurs in which a jitter cumulative value computed by the jitter accumulation unit 121 does not exceed predetermined limits of the upper limit DH and the lower limit DL. Specifically, high-precision frequency synchronization that removes any effect of jitters that widely vary depending on a network topology, performance of switches constituting a network, and traffic conditions can be achieved.

[Description of operation of the first embodiment]

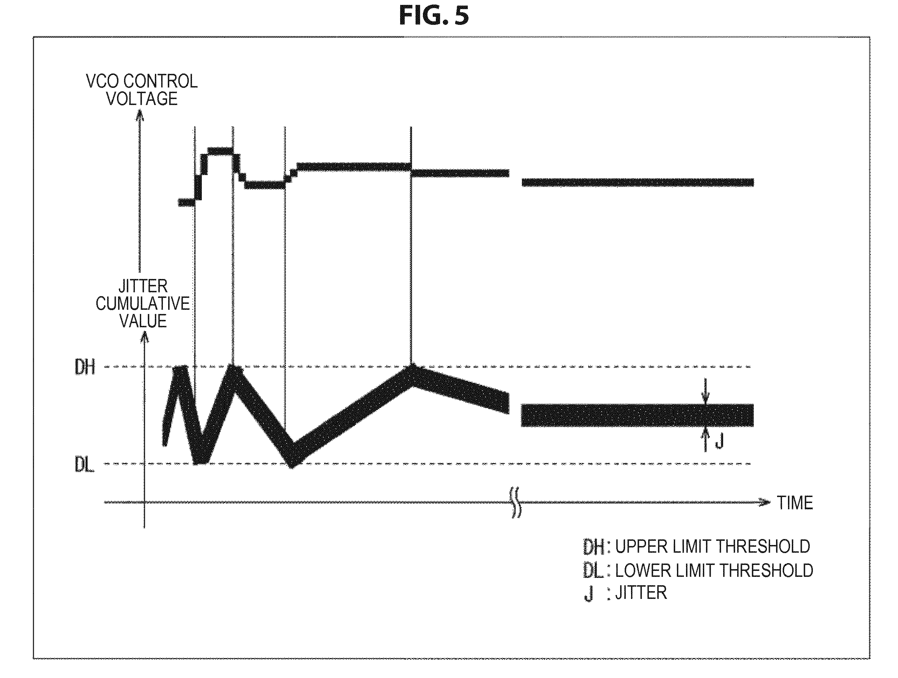

FIG. 5 shows an example of operation of the frequency error detection unit 111 of the receiver device 100.

A frequency lock loop circuit consists of the receipt time recording unit 12, the jitter amount calculation unit 14, the frequency error detection unit 111, the clock generation unit 4, and the counter 5.

As described above, an upper limit DH and a lower limit DL have been set in advance in the comparison unit 122 of the frequency error detection unit 111. The upper limit DH and the lower limit DL are determined depending on how much delay time and delay fluctuations are secured by (the synchronization processing device) of the receiver device 100. Note that the upper limit DH and the lower limit DL can be set not only by setting of a predetermined value in the comparison unit 122 in advance, but also with a result of measurement using a jitter amount. For example, the jitter accumulation unit 121 determines a maximum value and a minimum value of a jitter amount from jitter amounts of a predetermined number of samples to be supplied from the jitter amount calculation unit 14 to calculate jitter width J (= maximum value - minimum value), and can set the upper limit DH and the lower limit DL based on the calculated jitter width J.

When a jitter cumulative value reaches the upper limit DH, the comparison unit 122 outputs a control value for lowering a clock frequency. When a jitter cumulative value reaches the lower limit DL, the comparison unit 122 outputs a control value for increasing a clock frequency. Therefore, when the jitter cumulative value reaches the upper limit DH or the lower limit DL, frequency lock loop control for supplying a VCO control voltage that displaces the clock frequency in a reverse direction is performed.

Repeatedly reversing upon reaching the upper limit DH or the lower limit DL, the jitter cumulative value is stabilized after certain time elapses. Since the frequency error of the receiver device 100 becomes smaller each time the reversion is repeated, a period during which the VCO control voltage holds a certain value gradually becomes longer.

[Flow of frequency synchronization control processing of the first embodiment]

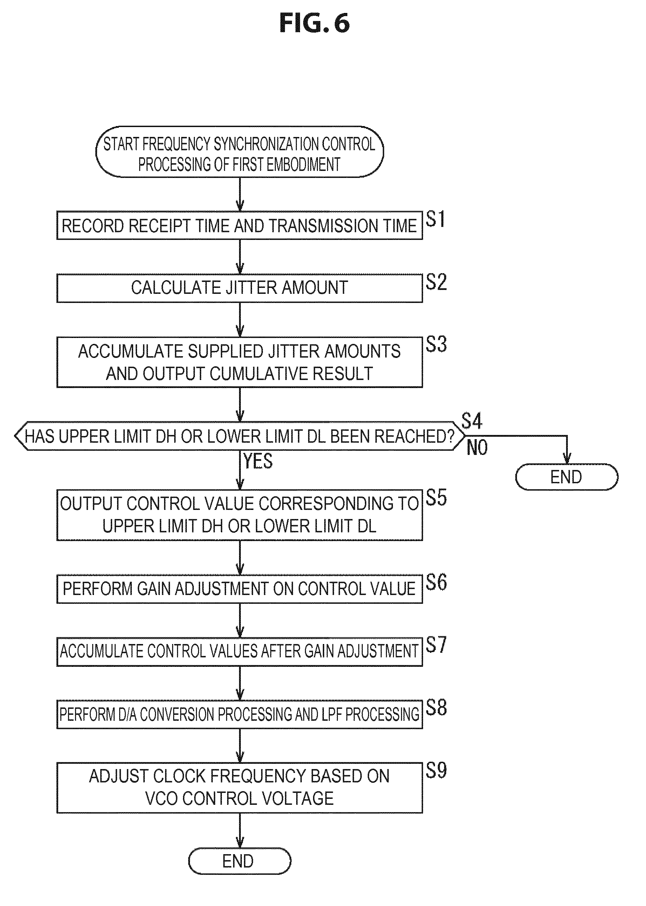

FIG. 6 is a flow chart illustrating frequency synchronization control processing by the first embodiment of the receiver device 100. The processing is performed, for example, every time a synchronization packet is received by the synchronization packet reception unit 11 of the receiver device 100.

When a synchronization packet is received by the synchronization packet reception unit 11, in step S1, the receipt time recording unit 12 and the transmission time recording unit 13 record receipt time and transmission time. Specifically, the receipt time recording unit 12 records a counter value of the counter 5 at the time when the synchronization packet is received. The transmission time recording unit 13 extracts and records transmission time contained in a synchronization packet supplied from the synchronization packet reception unit 11.

In step S2, the jitter amount calculation unit 14 calculates a jitter amount with the expression (1) on the basis of receipt time and transmission time of adjacent last two synchronization packets recorded in the receipt time recording unit 12 and the transmission time recording unit 13. The calculated jitter amount is outputted to the jitter accumulation unit 121.

In step S3, the jitter accumulation unit 121 accumulates jitter amounts supplied from the jitter amount calculation unit 14 and outputs a jitter cumulative value, which is results of accumulation, to the comparison unit 122.

In step S4, the comparison unit 122 judges whether the jitter cumulative value from the jitter accumulation unit 121 has reached either the upper limit DH or the lower limit DL.

In step S4, if it is judged that the jitter cumulative value has reached neither the upper limit DH nor the lower limit DL, the processing ends.

On the one hand, in step S4, if it is judged that the jitter cumulative value has reached either the upper limit DH or the lower limit DL, the processing proceeds to step S5.

In step S5, the comparison unit 122 outputs to the gain adjustment unit 123 a control value corresponding to the upper limit DH or the lower limit DL. Specifically, if the jitter cumulative value has reached the upper limit DH, the comparison unit 122 outputs a control value corresponding to the upper limit DH to the gain adjustment unit 123. On the one hand, if the jitter cumulative value has reached the lower limit DL, the comparison unit 122 outputs a control value corresponding to the lower limit DL to the gain adjustment unit 123.

In step S6, the gain adjustment unit 123 performs gain adjustment for multiplying a control value, which is output from the comparison unit 122, by predetermined gain.

In step S7, the control voltage generation unit 124 generates a VCO control voltage for correcting a frequency error by accumulating control values after gain adjustment, which are output of the gain adjustment unit 123, and outputs the VCO control voltage to the DAC&LPF 125.

In step S8, the DAC&LPF 125 performs D/A conversion processing for converting a digital VCO control voltage generated by the control voltage generation unit 124 into an analog signal and low-pass filtering of the VCO control voltage after the D/A conversion processing.

In step S9, the clock generation unit 4 generates clock CLK which is a clock frequency adjusted based on the VCO control voltage from the DAC&LPF 125. The adjusted clock frequency is outputted to the counter 5, the clock unit 6, the synchronization signal generation unit 7 and the like, and the processing ends.

The processing described above is performed every time a synchronization packet is received by the receiver device 100 in FIG. 2.

Unlike a conventional receiver device, the receiver device 100 has no noise reduction filter and can generate a VCO control voltage by comparing a jitter cumulative value, which is accumulation of computed jitter amounts, with an upper limit DH and a lower limit DL. Therefore, in the receiver device 100, frequency synchronization can be effectively established, in such a case where in a conventional receiver device, network noise is large, and noise reduction is difficult and entrainment time becomes longer unless a large number of filter stages are provided. Specifically, according to the receiver device 100, frequency synchronization can be achieved in a shorter period of time and with high precision.

(2. Second embodiment)

[Configuration block diagram of a receiver device]

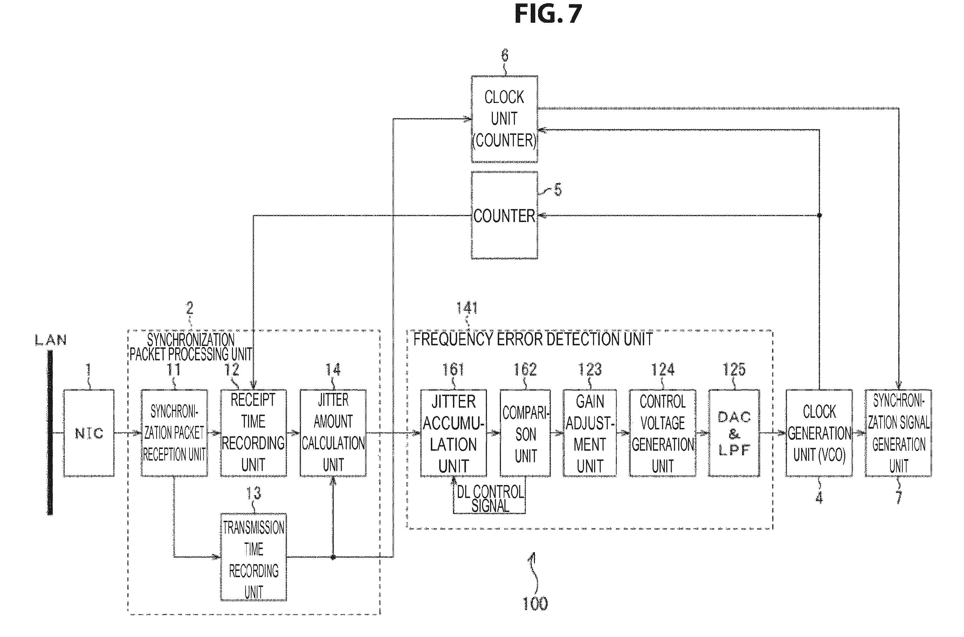

FIG. 7 is a block diagram showing a second embodiment of a receiver device. Note that identical symbols are assigned to parts in FIG. 7 which correspond to those in FIG. 2 and overlapping descriptions are omitted, as appropriate.

When compared with the receiver device 100 in FIG. 2 as described above, a receiver device 100 in FIG. 7 differs only in a configuration of a frequency error detection unit 141. In addition, when compared with the frequency error detection unit 111 in FIG. 2, the frequency error detection unit 141 differs only in a jitter accumulation unit 161 and a comparison unit 162.

Similar to the jitter accumulation unit 121 in FIG. 2, the jitter accumulation unit 161 accumulates a jitter amount that is sequentially supplied from a jitter amount calculation unit 14, and outputs a jitter cumulative value, which is a result of accumulation, to a comparison unit 122.

In addition, when a DL control signal is supplied from the comparison unit 162, the jitter accumulation unit 161 resets a jitter cumulative value stored therein to zero (shifts the jitter cumulative value till it is zero).

Similar to the comparison unit 122 in FIG. 2, the comparison unit 162 compares a jitter cumulative value with an upper limit DH or a lower limit DL, and outputs a corresponding control value to a gain adjustment unit 123 if the jitter cumulative value has reached either the upper limit DH or the lower limit DL.

In addition, when the jitter cumulative value reaches the lower limit DL, the comparison unit 162 outputs a DL control signal to the jitter accumulation unit 161.

As described with reference to FIG. 4, a jitter cumulative value is a value which is shifted by a certain constant from true arrival delay time. In addition, the jitter cumulative value may be shifted to the negative side from the true arrival delay time, depending on a sign of a frequency error on the receiving side, timing to start calculation of the jitter cumulative value and the like. However, since the true arrival delay time should have a positive sign, the jitter value, if it is shifted to the negative side, can be shifted to the positive side.

Then, in the receiver device 100 in FIG. 7, the comparison unit 162 sets the lower limit DL = 0, and outputs to the gain adjustment unit 123 a control value corresponding to the lower limit DL and supplies a DL control signal to the jitter accumulation unit 161 when the jitter cumulative value reaches the lower limit DL.

When the DL control signal is supplied from the comparison unit 162, the jitter accumulation unit 161 resets a jitter cumulative value stored therein to zero. Since the jitter accumulation unit 161 performs a zero-reset operation, there is no longer need to give consideration to the negative side. Thus, width from the upper limit DH to the lower limit DL to be set by the comparison unit 162 can be set smaller than the first embodiment described above. If the width from the upper limit DH to the lower limit DL can be set smaller, time that is a dead zone for frequency synchronization control can be reduced, which thereby makes it possible to reduce more time taken for frequency entrainment than the first embodiment.

[Description of operation of the second embodiment]

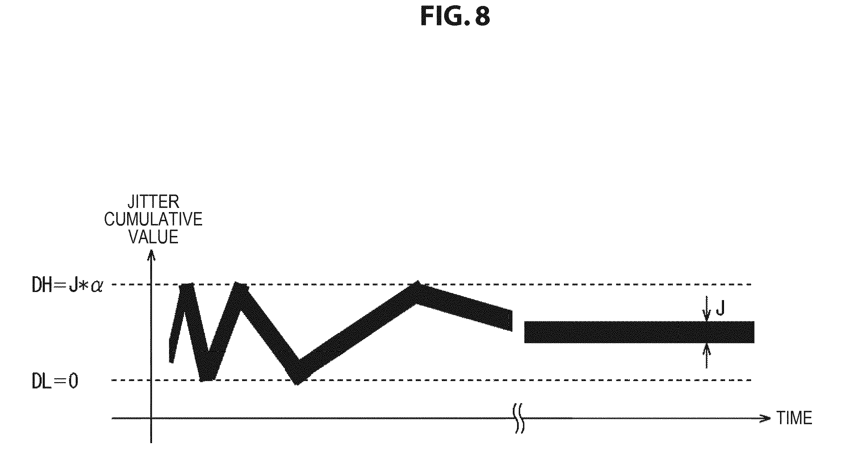

FIG. 8 shows an example of operation of the frequency error detection unit 141 of the second embodiment.

In the second embodiment, the lower limit DL can be set to zero and the upper limit DH can be set to a value of $\alpha$ times of reached jitter J in the network, that is to say, J x $\alpha$. Here, $\alpha$ is a coefficient of $\alpha > 0$, which represents an operation margin, and, can be set to, for example, $\alpha = 1.2$ or 1.3 and the like.

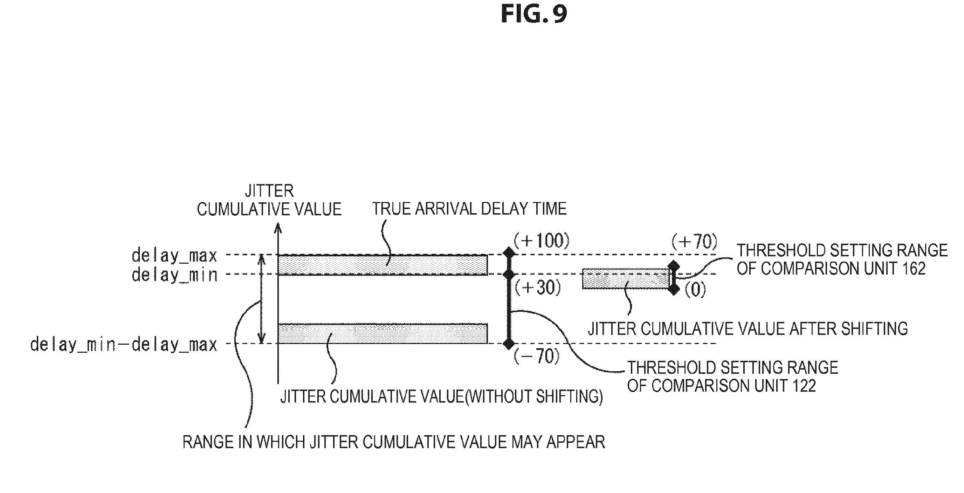

Differences in settings of the upper limit DH and the lower limit DL in the first embodiment and the second embodiment will be described with reference to FIG. 9.

FIG. 9 shows a relationship of a jitter cumulative value and true arrival delay time after a clock frequency on the receiving side is synchronized with that on the transmitting side.

In FIG. 9, a region shown in gray corresponds to the jitter cumulative value of FIG. 4 or a range of broken lines of the arrival delay time, and indicates an operating range of the arrival delay time or the jitter cumulative values. In addition, it is assumed in FIG. 9 that the true arrival delay time is known.

In FIG. 9, a maximum value of the true arrival delay time is delay_max, and a minimum value of the true arrival delay time is delay_min. In this case, a jitter cumulative value of each sample shifts from (delay_min - delay_max) to somewhere in the range of delay_max, while holding a profile of the true arrival delay time. Therefore, in the first embodiment in which no zero-reset operation is performed, in order to cover this range to control the frequency lock loop, the upper limit DH and the lower limit DL need to be set to the upper limit DH = (delay_max) x $\alpha$ and the lower limit DL = (delay_min - delay_max) = -J, respectively.

For example, a case is assumed in which the jitter width J is 70[ns], and a maximum value of the true arrival delay time is delay_max = 100[ns] and a minimum value of the true arrival delay time is delay_min =30[ns]. In the first embodiment, with the above expression, setting of a range of the upper limit DH = 100[ns] x $\alpha$ and the lower limit DL = -70[ns] becomes necessary, and when $\alpha = 1$, a dead zone has the width of 170[ns].

In contrast, in the second embodiment, setting of the range, the upper limit DH = J x $\alpha$ = 70[ns] x $\alpha$ and the lower limit DL = 0, is possible. When $\alpha = 1$, the dead zone is 70[ns]. Specifically, since the lower limit DL can be set to zero corresponding to the zero reset and the upper limit DH can be set to 70[ns] x $\alpha$ corresponding to the jitter width J, the width from the upper limit DH to the lower limit DL can be set smaller than the first embodiment described above.

[Flow of frequency synchronization control processing of the second embodiment]

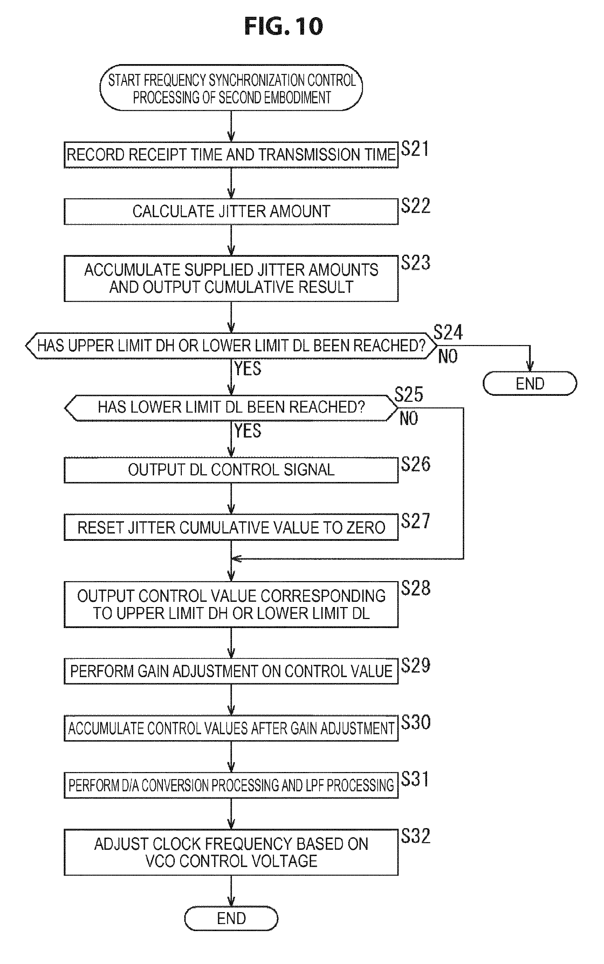

FIG. 10 is a flow chart illustrating frequency synchronization control processing by the second embodiment of the receiver device 100. The processing is performed, for example, every time a synchronization packet is received by the synchronization packet reception unit 11 of the receiver device 100.

Since steps from S21 to S24 are processing similar to steps S1 to S4 in FIG. 6 as described above, descriptions thereof will be omitted.

In step S24 in FIG. 10, if it is judged that the jitter cumulative value has reached either the upper limit DH or the lower limit DL, the processing proceeds to step S25 where the comparison unit 162 judges whether the lower limit DL has been reached.

In step S25, if it is judged that the jitter cumulative value has reached the lower limit DL, the processing proceeds to step S26 where the comparison unit 162 outputs a DL control signal to the jitter accumulation unit 161. Then, in step S27, the jitter accumulation unit 161 resets a jitter cumulative value stored therein to zero based on the supplied DL control signal.

On the one hand, in step S25, if it is judged that the jitter cumulative value has not reached the lower limit DL, that is to say, that the jitter cumulative value has reached the upper limit DH, the processing in step S26 and step S27 is omitted.

Since steps from S28 to S32 are processing similar to steps S5 to S9 in FIG. 6 as described above, descriptions thereof will be omitted.

The processing described above is performed every time a synchronization packet is received by the receiver device 100 in FIG. 7.

In the receiver device 100 in FIG. 7, similar to the first embodiment, frequency synchronization can be achieved in a shorter period of time and with high precision. In addition, since the width from the upper limit DH to the lower limit DL (dead zone) can be set smaller than the receiver device 100 in FIG. 2, more time taken for frequency entrainment can be reduced than the first embodiment.

Note that in the example of the second embodiment as described above, the jitter accumulation unit 161 is designed to set the jitter cumulative value stored therein to zero when the jitter cumulative value reaches the lower limit DL and a DL control signal is supplied.

However, a value to be set when a DL control signal is supplied can be any predetermined value other than zero. For example, in the example of FIG. 9 in which the jitter width J is 70[ns], a value to be set when a DL control signal is supplied may be "20". In this case, setting of the range of the lower limit DL = 20[ns] and the upper limit DH = 90[ns] becomes necessary and a dead zone when $\alpha = 1$ has the width of 70[ns] similar to the case of zero-reset.

However, when a jitter cumulative value is set to a predetermined value, the jitter accumulation unit 161 further needs to have an adder that adds a jitter cumulative value it holds till it becomes the predetermined value. In contrast to this, when a jitter cumulative value is set to zero, a reset operation of an internal memory that holds a jitter cumulative value can be utilized. Therefore, this embodiment can be achieved with a simpler configuration by use of the zero reset.

(3. Third embodiment)

[Configuration block diagram of a receiver device]

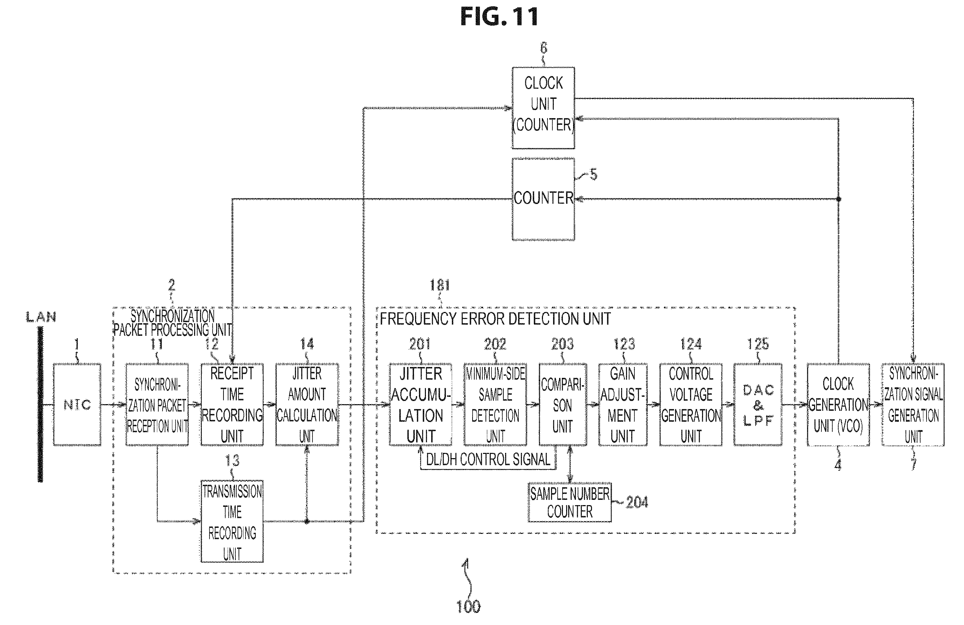

FIG. 11 is a block diagram showing a third embodiment of a receiver device. Also in FIG. 11, identical symbols are assigned to parts which correspond to those in FIG. 2 and FIG. 7, and overlapping descriptions are omitted, as appropriate.

Compared with the receiver device 110 in FIG. 7 as described above, a receiver device 100 in FIG. 11 differs only in a configuration of a frequency error detection unit 181. In addition, when compared with the frequency error detection unit 141 in FIG. 7, the frequency error detection unit 181 is not only different in a jitter accumulation unit 201 and a comparison unit 203, but also newly provided with a minimum-side sample detection unit 202 and a sample number counter 204.

Similar to the jitter accumulation unit 161 in FIG. 7, the jitter accumulation unit 201 performs processing to accumulate jitter amounts to be supplied. In addition, when a DL control signal is supplied from the comparison unit 203, the jitter accumulation unit 201 sets a jitter cumulative value stored therein to a first value. Here, the first value can be set to zero, similar to the second embodiment as described above.

In the third embodiment, there are some cases in which the comparison unit 203 supplies a DH control signal to the jitter accumulation unit 201, in addition to a DL control signal. When a DH control signal is supplied from the comparison unit 203, the jitter accumulation unit 201 sets the jitter cumulative value stored therein to a second value. Here, the second value may be any value between the upper limit DH and the lower limit DL, and can be a mean value of the upper limit DH and the lower limit DL, for example.

A jitter cumulative value operated by the jitter accumulation unit 201 is supplied to the minimum-side sample detection unit 202. The minimum-side sample detection unit 202 performs an operation of detecting a jitter cumulative value on the minimum value side from jitter cumulative values of jitter width J to be supplied from the jitter accumulation unit 201, and outputting it to the comparison unit 203.

Similar to the comparison unit 162 in FIG. 7, the comparison unit 203 compares a jitter cumulative value to be supplied with the upper limit DH and the lower limit DL, and outputs a corresponding control value to the gain adjustment unit 123 when the jitter cumulative value has reached either the upper limit DH or the lower limit DL.

In addition, the comparison unit 203 supplies a DL control signal to the jitter accumulation unit 201 when the jitter cumulative value reaches the lower limit DL.

In addition, using the sample number counter 204, the comparison unit 203 counts the number of continuous occurrences (number of continuous arrivals) that the jitter cumulative value has reached the upper limit DH. Then, when the number of continuous arrivals at the upper limit DH exceeds a predetermined threshold $N_{TH}$, the comparison unit 203 supplies a DH control signal to the jitter accumulation unit 201.

Now, a description will be given with the example of the second embodiment, shown in FIG. 9, in which the lower limit DL = 0 and the upper limit DH = 70[ns], and the jitter width J = 70[ns] when $\alpha$ = 1. The minimum-side sample detection unit 202 outputs to the comparison unit 203 only jitter cumulative values in a range from -10[ns] to 20[ns], as samples on the minimum value side. It is assumed that the lower limit DL = -5[ns], the upper limit DH = 15[ns], and a threshold $N_{TH}$ for the number of continuous arrivals = 10 are set in the comparison unit 203. In this case, the comparison unit 203 supplies a DL control signal to the jitter accumulation unit 201 when the jitter cumulative value reaches the lower limit DL = -5, and supplies a DH control signal to the jitter accumulation unit 201 when the jitter cumulative value reaches the upper limit DH=10 for ten consecutive times.

Under the control of the comparison unit 203, the sample number counter 204 counts and stores the number of continuous arrivals (number of samples of synchronization packets) of jitter cumulative values in the comparison unit 203. The sample number counter 204 may be a timer for measuring time or may be a counter that counts a period of time during which a state in which jitter cumulative values reach the upper limit value DH has continued, instead of the number of times that the jitter cumulative values have continuously reached the upper limit DH. In this case, when the state in which the jitter cumulative value reaches the upper limit DH has continued for more than a fixed time, the comparison unit 201 supplies a DH control signal to the jitter accumulation unit 201.

In the third embodiment, a reason why only a jitter cumulative value on the minimum value side is used from jitter cumulative values to be supplied from the jitter accumulation unit 201 will be described.

A jitter cumulative value becomes a minimum when a synchronization packet is directly transmitted in a moment over the network, without overlapping with transmission of other packets. Therefore, a state (condition) in which the jitter cumulative value becomes a minimum is fixed and the minimum is stable. In view of the minimum B of the jitter cumulative value and the minimum C of the arrival delay time in FIG. 4, this is obvious.

In contrast to this, when transmission of the synchronization packet overlaps with transmission of other packets, the transmission of the synchronization packet is postponed, and output waiting time thereof depends on time required for the transmission of the other packets and is not fixed. This is because a value on the side of the maximum value of the jitter cumulative value depends on status at that time and a number of uncertain elements are contained. Thus, in the third embodiment, the minimum-side sample detection unit 202 is provided to use a jitter cumulative value on the minimum value side, which is more stable. In this case, the lower limit DL and the upper limit DH to be set by the comparison unit 203 can be set to be a narrower range (dead zone), in line with the sample on the minimum value side, which is output of the minimum-side sample detection unit 202.

[Description of operation of the third embodiment]

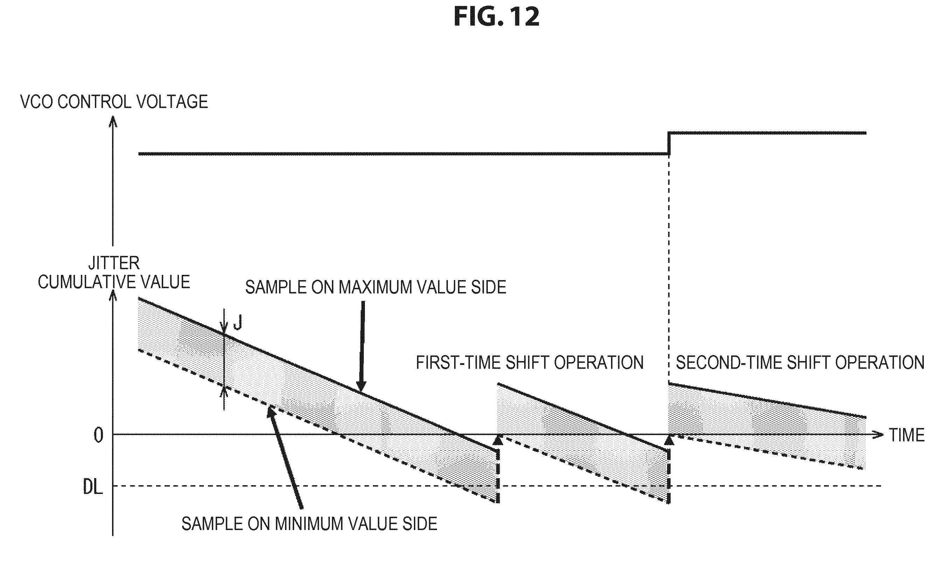

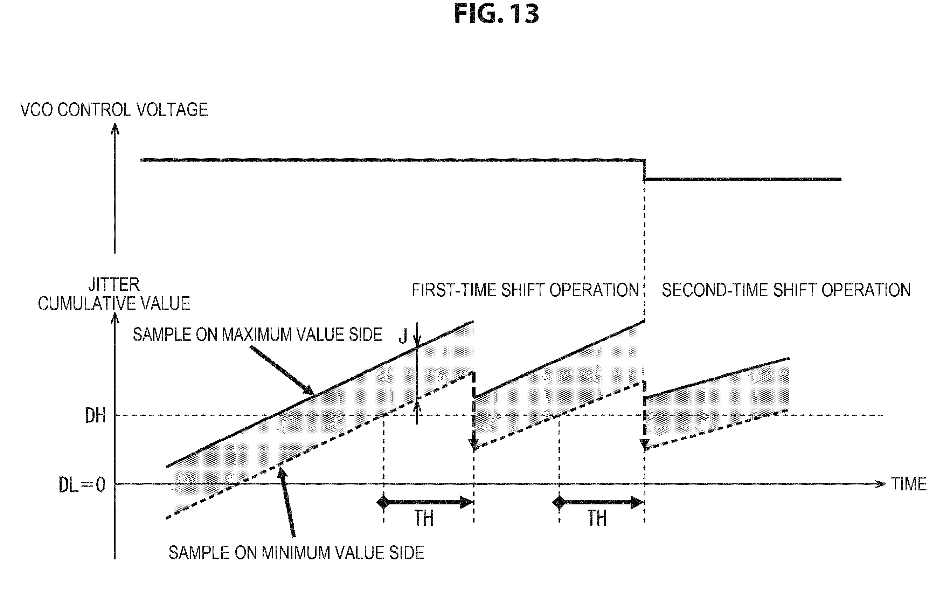

The operation of the frequency error detection unit 181 of the third embodiment will be described with reference to FIG. 12 and FIG. 13.

FIG. 12 shows an example of the operation in which a jitter cumulative value reaches a lower limit DL.

Of jitter cumulative values that fall within jitter width J to be supplied from the jitter accumulation unit 201, jitter cumulative values close to the side shown by the broken line represent samples on the minimum value side, and jitter cumulative values close to the side shown by the solid line represent samples on the maximum value side. Jitter cumulative values to be outputted to the comparison unit 203 from the minimum-side sample detection unit 202 are samples of the jitter width J in a range of certain height from the broken line.

In FIG. 12, the computed jitter cumulative value gradually decreases in the range of the jitter width J. Then, when the jitter cumulative value reaches the lower value DL, a DL control signal is supplied to the jitter accumulation unit 201 and a jitter cumulative value held in the jitter accumulation unit 201 is reset (shifted to zero).

In addition, as the comparison unit 203 outputs a control value corresponding to the lower limit DL when the jitter cumulative value reaches the lower limit DL, the control value changes a VCO control voltage so as to increase a clock frequency.

In addition, as shown in FIG. 12, when the jitter cumulative value reaches the lower limit DL for the first value, only an operation of resetting the jitter cumulative value is performed and the VCO control voltage is not changed. Then, if the jitter cumulative value reaches the lower limit DL for the second and subsequent times, the operation of resetting the jitter cumulative value and changing of the VCO control voltage, which increases the clock frequency, are performed. This is because the comparison unit 203 is such designed that it does not output a control value corresponding to the lower limit DL when the lower limit DL is reached for the first time. As described above, although the jitter cumulative value is a value shifted from true arrival delay time due to timing to start calculation of a jitter cumulative value, etc., an amount of shift or direction of shift thereof is unknown. Thus, the comparison unit 203 only performs processing to correct the jitter cumulative value to a range between the lower limit DL and the upper limit DH when the lower limit DL is reached for the first time. This can reduce more frequency entrainment time.

Note that in the third embodiment, a VCO control voltage may be changed when the lower limit DL is reached for the first time, as with the second embodiment, or alternatively, like the third embodiment, even in the second embodiment, a control value corresponding to the lower limit DL is not outputted when arrival at the lower limit DL is detected for the first time. Specifically, it can be set as appropriate whether or not to output a control value to detection of arrival at the lower limit DL for the first time.

FIG. 13 shows an example of operation when a jitter cumulative value reaches an upper limit DH.

In FIG. 13, the computed jitter cumulative value gradually increases in the range of jitter width J. Then, when the jitter cumulative value higher than the upper limit DH has continued for $N_{TH}$ times, that is to say, when the jitter cumulative value higher than the upper limit DH has continued for TH hours in terms of time, the comparison unit 203 supplies a DH control signal to the jitter accumulation unit 201. When the DH control signal is supplied to the jitter accumulation unit 201, a jitter cumulative value held in the jitter accumulation unit 201 is shifted to a mean value of the lower limit DL and the upper limit DH. In the example of FIG. 13, the jitter cumulative value held in the jitter accumulation unit 201 is shifted to DH/2 as the lower limit DL being zero.

When the jitter cumulative value higher than the upper limit DH has continued for TH hours, the comparison unit 203 outputs to the gain adjustment unit 123 a control value corresponding to the upper limit DH. Then, the control value changes the VCO control voltage so as to lower the clock frequency. In this case, however, similar to when the lower limit DL is reached, as described in FIG. 12, the comparison unit 203 does not output a control value for changing the VCO control voltage upon first-time detection, and outputs to the gain adjustment unit 123 the control value corresponding to the upper limit DH from second detection or the subsequent detection.

In the third embodiment, since only samples on the minimum value side are detected and outputted to the comparison unit 203, the width of the lower limit DL and the upper limit DH (dead zone) can be set independent of the jitter width. In contrast to this, in the first and second embodiments as described above, the width of the lower limit DL and the upper limit DH needs to be set in line with the jitter width J. Therefore, according to the third embodiment, more frequency entrainment time can be reduced than the first and second embodiments.

[Flow of frequency synchronization control processing of the third embodiment]

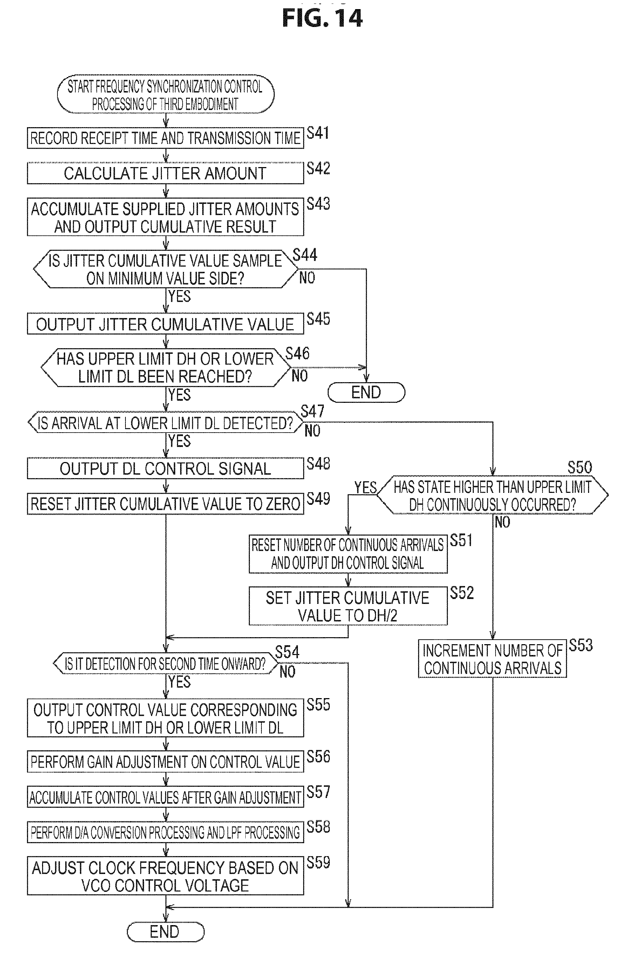

FIG. 14 is a flow chart illustrating frequency synchronization control processing by the third embodiment of the receiver device 100. The processing is performed, for example, every time a synchronization packet is received by the synchronization reception unit 11 of the receiver device 100.

Each of steps S41 to S43 in FIG. 14 is processing similar to step S1 to step S3 in FIG. 6 as described. Specifically, in the jitter amount calculation unit 14, a jitter amount is calculated based on receipt time and transmission time of two synchronization packets: a received synchronization packet and a synchronization packet received before it. Then, in the jitter accumulation unit 201, a jitter cumulative value is computed and supplied to the minimum-side sample detection unit 202.

Next, in step S44, the minimum-side sample detection unit 202 judges whether the jitter cumulative value supplied from the jitter accumulation unit 201 is a sample on the minimum value side which is in a certain range from a minimum value.

In step S44, if it is judged that the supplied jitter cumulative value is not the sample on the minimum value side, the processing ends.

On the one hand, in step S44, if it is judged that the supplied jitter cumulative value is the sample on the minimum value side, the processing proceeds to step S45 where the minimum-side sample detection unit 202 outputs the jitter cumulative value to the comparison unit 203.

In step S46, the comparison unit 203 judges whether the jitter cumulative value from the minimum-side sample detection unit 202 has reached either the upper limit DH or the lower limit DL.

In step S46, if it is judged that the jitter cumulative value has reached neither the upper limit DH nor the lower limit DL, the processing ends.

On the one hand, in step S46, if it is determined that the jitter cumulative value has reached either the upper limit DH or the lower limit DL, the processing proceeds to step S47 where the comparison unit 203 judges whether arrival at the lower limit DL has been detected.

In step S47, if it is judged that the arrival at the lower limit DL has been detected, the processing proceeds to step S48 where the comparison unit 203 supplies a DL control signal to the jitter accumulation unit 201. Then, in step S49, the jitter accumulation unit 201 resets the jitter cumulative value stored therein to zero on the basis of the supplied DL control signal.

On the one hand, in step S47, if it is judged that it is not the arrival at the lower limit DL, that is to say, if arrival at the upper limit DH has been detected, the processing proceeds to step S50 where the comparison unit 203 judges whether a state higher than the upper limit DH has continuously occurred for TH hours.

If the jitter cumulative value higher than the upper limit DH has continued for at least $N_{TH}$ times and it is judged in step S50 that the state higher than the upper limit DH has continuously occurred for TH hours, the processing proceeds to step S51. In step S51, the comparison unit 203 resets the number of continuous arrivals at the upper limit DH, which is a count value of the sample number counter 204, and outputs a DH control signal to the jitter accumulation unit 201.

In step S52, the jitter accumulation unit 201 sets a jitter cumulative value stored therein to a predetermined value between the upper limit DH and the lower limit DL (for example, DH/2).

On the one hand, in step S50, if it is judged that the state higher than the upper limit DH has not continuously occurred for TH hours, the processing proceeds to step S53. In step S53, the comparison unit 203 increments by 1 a count value of the sample number counter 204 that counts the number of continuous arrivals at the upper limit DH, and ends the processing.

After processing in step S49 or step S52, the comparison unit 203 judges in step S54 whether detection of the arrival at the lower limit DL or the continued state of the upper limit DH or higher is the second detection or the subsequent detection. If it is judged in step 54 that it is not the second detection or the subsequent detection, that is to say, that it is the first-time detection, the processing ends.

On the one hand, in step S54, if it is judged that it is the second detection or the subsequent detection, the processing proceeds to step S55 where the receiver device 100 sequentially performs the processing from step S55 to step S59. Since the processing from step S55 to step S59 is similar to that in step S5 to step S9 in FIG. 6, a description is omitted.

The processing described above is performed every time a synchronization packet is received by the receiver device 100 in FIG. 11.

Since the width from the upper limit DH to the lower limit DL can be set smaller in the receiver device 100 in FIG. 11 than the receiver device 100 in FIG. 2 or FIG. 7, more time taken for frequency entrainment can be reduced than the first and second embodiments.

[Configuration Example of Computer]

The series of processes described above can be executed by hardware but can also be executed by software. When the series of processes is executed by software, a program that constructs such software is installed into a computer. Here, the expression "computer" includes a computer in which dedicated hardware is incorporated and a general-purpose personal computer or the like that is capable of executing various functions when various programs are installed.

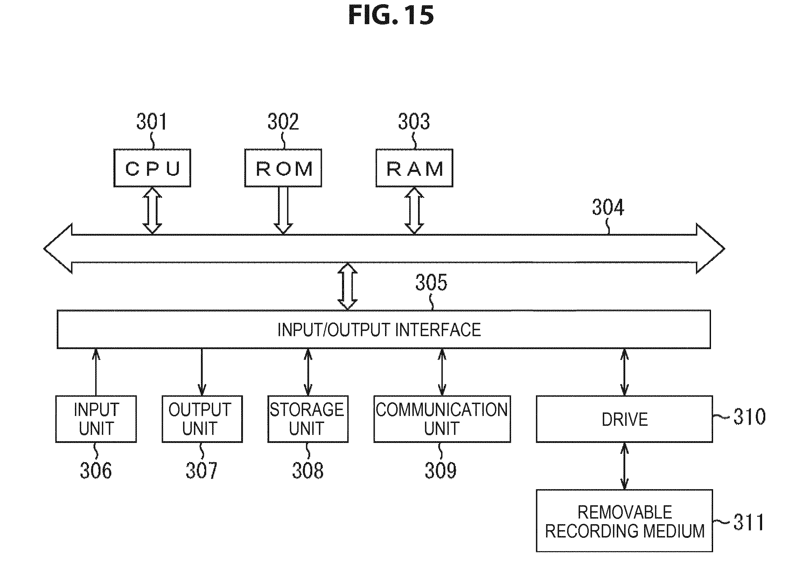

FIG. 15 is a block diagram showing an example configuration of the hardware of a computer that executes the series of processes described earlier according to a program.

In the computer, a central processing unit (CPU) 301, a read only memory (ROM) 302 and a random access memory (RAM) 303 are mutually connected by a bus 304.

An input/output interface 305 is also connected to the bus 304. An input unit 306, an output unit 307, a storage unit 308, a communication unit 309, and a drive 310 are connected to the input/output interface 305.

The input unit 306 is configured from a keyboard, a mouse, a microphone or the like. The output unit 307 configured from a display, a speaker or the like. The storage unit 308 is configured from a hard disk, a non-volatile memory or the like. The communication unit 309 is configured from a network interface or the like. The drive 310 drives a removable recording media 311 such as a magnetic disk, an optical disk, a magneto-optical disk, a semiconductor memory or the like.

In the computer configured as described above, the CPU 301 loads a program that is stored, for example, in the storage unit 308 onto the RAM 303 via the input/output interface 305 and the bus 304, and executes the program. Thus, the above-described series of processing is performed.

In the computer, by loading the removable recording medium 311 into the drive 310, the program can be installed into the storage unit 308 via the input/output interface 305. It is also possible to receive the program from a wired or wireless transfer medium such as a local area network, the Internet, digital satellite broadcasting, etc., using the communication unit 309 and install the program into the storage unit 308. As another alternative, the program can be installed in advance into the ROM 302 or the storage unit 308.

Note that steps written in the flowcharts accompanying this specification may of course be executed in a time series in the illustrated order, but such steps do not need to be executed in a time series and may be carried out in parallel or at necessary timing, such as when the processes are called.

An embodiment of the disclosure is not limited to the embodiments described above, and various changes and modifications may be made without departing from the scope of the disclosure.

Additionally, the present technology may also be configured as below.

(1) A synchronization processing device including:

a jitter amount calculation unit for calculating a jitter amount on the basis of a synchronization packet containing time information;

an accumulation unit for calculating a cumulative value of the jitter amount calculated by the jitter amount calculation unit;

a frequency error correction unit for outputting a frequency error correction value from the cumulative value of the jitter amount calculated by the accumulation unit; and

a control voltage output unit for outputting a frequency control voltage based on the frequency error correction value.

(2) The synchronization processing device according to (1), wherein the frequency error correction unit compares the cumulative value of the jitter amount calculated by the accumulation unit with an upper limit threshold and a lower limit threshold, and outputs the frequency error correction value when the cumulative value of the jitter amount calculated by the accumulation unit exceeds the upper limit threshold or the lower limit threshold.

(3) The synchronization processing device according to (2), wherein the frequency error correction unit outputs the frequency error correction value for lowering a frequency when the cumulative value of the jitter amount exceeds the upper limit threshold, and outputs the frequency error correction value for increasing the frequency when the cumulative value of the jitter amount exceeds the lower limit threshold.

(4) The synchronization processing device according to (2) or (3), wherein the accumulation unit sets the cumulative value of the jitter amount to a predetermined value when the cumulative value of the jitter amount exceeds the lower limit threshold.

(5) The synchronization processing device according to (4), wherein the lower limit threshold and the predetermined value are zero.

(6) The synchronization processing device according to (4) or (5), further including:

a minimum-side sample detection unit for detecting and outputting only a sample on a minimum value side of the cumulative value of the jitter amount that can be obtained by the accumulation unit,

wherein when a state in which the cumulative value of the jitter amount exceeding the upper limit threshold has continued for a predetermined time is detected, the accumulation unit sets the cumulative value of the jitter amount to a value between the upper limit threshold and the lower limit threshold.

(7) The synchronization processing device according to any one of (4) to (6), wherein the frequency error correction unit outputs the frequency error correction value if detection of a state in which the cumulative value of the jitter amount calculated by the accumulation unit exceeding the lower limit threshold or the upper limit threshold has continued for a predetermined time is second detection or subsequent detection.

(8) The synchronization processing device according to any one of (1) to (7), further including:

a gain adjustment unit for adjusting a gain for the frequency error correction value to be outputted by the frequency error correction unit.

(9) A synchronization processing method including the steps, performed by a synchronization processing device, of:

calculating a jitter amount on the basis of a synchronization packet containing time information;
calculating a cumulative value of the calculated jitter amount;
outputting a frequency error correction value from the cumulative value of the calculated jitter amount; and
outputting a frequency control voltage based on the frequency error correction value.

(10) A program for causing a computer to function as:

a jitter amount calculation unit for calculating a jitter amount on the basis of a synchronization packet containing time information;
an accumulation unit for calculating a cumulative value of the jitter amount calculated by the jitter amount calculation unit;
a frequency error correction unit for outputting a frequency error correction value from the cumulative value of the jitter amount calculated by the accumulation unit; and
a control voltage output unit for outputting a frequency control voltage based on the frequency error correction value.

Reference Signs List

| 2 | synchronization packet processing unit |
| 14 | jitter amount calculation unit |
| 100 | receiver device |
| 111 | frequency error detection unit |
| 121 | jitter accumulation unit |
| 122 | comparison unit |
| 123 | gain adjustment unit |
| 124 | control voltage generation unit |
| 141 | frequency error detection unit |
| 161 | jitter accumulation unit |
| 162 | comparison unit |
| 181 | jitter accumulation unit |
| 201 | jitter accumulation unit |
| 202 | minimum-side sample detection unit |
| 203 | comparison unit |
| 204 | sample number counter |

Claims

1. A synchronization processing device comprising:

a jitter amount calculation unit for calculating a jitter amount on the basis of a synchronization packet containing time information;

an accumulation unit for calculating a cumulative value of the jitter amount calculated by the jitter amount calculation unit;

a frequency error correction unit for outputting a frequency error correction value from the cumulative value of the jitter amount calculated by the accumulation unit; and

a control voltage output unit for outputting a frequency control voltage based on the frequency error correction value.

2. The synchronization processing device according to claim 1, wherein the frequency error correction unit compares the cumulative value of the jitter amount calculated by the accumulation unit with an upper limit threshold and a lower limit threshold, and outputs the frequency error correction value when the cumulative value of the jitter amount calculated by the accumulation unit exceeds the upper limit threshold or the lower limit threshold.

3. The synchronization processing device according to claim 2, wherein the frequency error correction unit outputs the frequency error correction value for lowering a frequency when the cumulative value of the jitter amount exceeds the upper limit threshold, and outputs the frequency error correction value for increasing the frequency when the cumulative value of the jitter amount exceeds the lower limit threshold.

4. The synchronization processing device according to claim 2, wherein the accumulation unit sets the cumulative value of the jitter amount to a predetermined value when the cumulative value of the jitter amount exceeds the lower limit threshold.

5. The synchronization processing device according to claim 4, wherein the lower limit threshold and the predetermined value are zero.

6. The synchronization processing device according to claim 4, further comprising:

a minimum-side sample detection unit for detecting and outputting only a sample on a minimum value side of the cumulative value of the jitter amount that can be obtained by the accumulation unit,

wherein when a state in which the cumulative value of the jitter amount exceeding the upper limit threshold has continued for a predetermined time is detected, the accumulation unit sets the cumulative value of the jitter amount to a value between the upper limit threshold and the lower limit threshold.

7. The synchronization processing device according to claim 6, wherein the frequency error correction unit outputs the frequency error correction value if detection of a state in which the cumulative value of the jitter amount calculated by the accumulation unit exceeding the lower limit threshold or the upper limit threshold has continued for a predetermined time is second detection or subsequent detection.

8. The synchronization processing device according to claim 1, further comprising:

a gain adjustment unit for adjusting a gain for the frequency error correction value to be outputted by the frequency error correction unit.

9. A synchronization processing method comprising the steps, performed by a synchronization processing device, of:

calculating a jitter amount on the basis of a synchronization packet containing time information;
calculating a cumulative value of the calculated jitter amount;
outputting a frequency error correction value from the cumulative value of the calculated jitter amount; and
outputting a frequency control voltage based on the frequency error correction value.

10. A program for causing a computer to function as:

a jitter amount calculation unit for calculating a jitter amount on the basis of a synchronization packet containing time information;
an accumulation unit for calculating a cumulative value of the jitter amount calculated by the jitter amount calculation unit;
a frequency error correction unit for outputting a frequency error correction value from the cumulative value of the jitter amount calculated by the accumulation unit; and
a control voltage output unit for outputting a frequency control voltage based on the frequency error correction value.

**FIG. 1**

# FIG. 2

EP 2 811 684 A1

# FIG. 3

## FIG.4

# FIG. 5

DH : UPPER LIMIT THRESHOLD
DL : LOWER LIMIT THRESHOLD
J : JITTER

EP 2 811 684 A1

# FIG. 6

START FREQUENCY SYNCHRONIZATION CONTROL PROCESSING OF FIRST EMBODIMENT

RECORD RECEIPT TIME AND TRANSMISSION TIME — S1

CALCULATE JITTER AMOUNT — S2

ACCUMULATE SUPPLIED JITTER AMOUNTS AND OUTPUT CUMULATIVE RESULT — S3

HAS UPPER LIMIT DH OR LOWER LIMIT DL BEEN REACHED? — S4

NO → END

YES

OUTPUT CONTROL VALUE CORRESPONDING TO UPPER LIMIT DH OR LOWER LIMIT DL — S5

PERFORM GAIN ADJUSTMENT ON CONTROL VALUE — S6

ACCUMULATE CONTROL VALUES AFTER GAIN ADJUSTMENT — S7

PERFORM D/A CONVERSION PROCESSING AND LPF PROCESSING — S8

ADJUST CLOCK FREQUENCY BASED ON VCO CONTROL VOLTAGE — S9

END

**FIG. 7**

# FIG. 8

# FIG.9

# FIG. 10

START FREQUENCY SYNCHRONIZATION CONTROL
PROCESSING OF SECOND EMBODIMENT

RECORD RECEIPT TIME AND TRANSMISSION TIME — S21

CALCULATE JITTER AMOUNT — S22

ACCUMULATE SUPPLIED JITTER AMOUNTS
AND OUTPUT CUMULATIVE RESULT — S23

HAS UPPER LIMIT DH OR LOWER LIMIT DL BEEN REACHED? — S24
NO

END

YES

HAS LOWER LIMIT DL BEEN REACHED? — S25
NO

YES

OUTPUT DL CONTROL SIGNAL — S26

RESET JITTER CUMULATIVE VALUE TO ZERO — S27

OUTPUT CONTROL VALUE CORRESPONDING
TO UPPER LIMIT DH OR LOWER LIMIT DL — S28

PERFORM GAIN ADJUSTMENT ON CONTROL VALUE — S29

ACCUMULATE CONTROL VALUES AFTER GAIN ADJUSTMENT — S30

PERFORM D/A CONVERSION PROCESSING AND LPF PROCESSING — S31

ADJUST CLOCK FREQUENCY BASED ON
VCO CONTROL VOLTAGE — S32

END

# FIG. 11

# FIG.12

VCO CONTROL VOLTAGE

JITTER
CUMULATIVE VALUE    SAMPLE ON MAXIMUM VALUE SIDE

J

FIRST-TIME SHIFT OPERATION    SECOND-TIME SHIFT OPERATION

0                                                                    TIME

DL

SAMPLE ON MINIMUM VALUE SIDE

EP 2 811 684 A1

## FIG. 13

EP 2 811 684 A1

VCO CONTROL VOLTAGE

JITTER
CUMULATIVE VALUE

SAMPLE ON MAXIMUM VALUE SIDE    J

FIRST-TIME SHIFT OPERATION    SECOND-TIME SHIFT OPERATION

DH

$DL = 0$

TIME

TH        TH

SAMPLE ON MINIMUM VALUE SIDE

# FIG. 14

START FREQUENCY SYNCHRONIZATION CONTROL PROCESSING OF THIRD EMBODIMENT

RECORD RECEIPT TIME AND TRANSMISSION TIME — S41

CALCULATE JITTER AMOUNT — S42

ACCUMULATE SUPPLIED JITTER AMOUNTS AND OUTPUT CUMULATIVE RESULT — S43

IS JITTER CUMULATIVE VALUE SAMPLE ON MINIMUM VALUE SIDE? — S44 / NO

YES

OUTPUT JITTER CUMULATIVE VALUE — S45

HAS UPPER LIMIT DH OR LOWER LIMIT DL BEEN REACHED? — S46 / NO

YES

END

IS ARRIVAL AT LOWER LIMIT DL DETECTED? — S47 / NO

YES

OUTPUT DL CONTROL SIGNAL — S48

RESET JITTER CUMULATIVE VALUE TO ZERO — S49

HAS STATE HIGHER THAN UPPER LIMIT DH CONTINUOUSLY OCCURRED? — S50 / YES / NO

RESET NUMBER OF CONTINUOUS ARRIVALS AND OUTPUT DH CONTROL SIGNAL — S51

SET JITTER CUMULATIVE VALUE TO DH/2 — S52

INCREMENT NUMBER OF CONTINUOUS ARRIVALS — S53

IS IT DETECTION FOR SECOND TIME ONWARD? — S54 / NO

YES

OUTPUT CONTROL VALUE CORRESPONDING TO UPPER LIMIT DH OR LOWER LIMIT DL — S55

PERFORM GAIN ADJUSTMENT ON CONTROL VALUE — S56

ACCUMULATE CONTROL VALUES AFTER GAIN ADJUSTMENT — S57

PERFORM D/A CONVERSION PROCESSING AND LPF PROCESSING — S58

ADJUST CLOCK FREQUENCY BASED ON VCO CONTROL VOLTAGE — S59

END

# FIG. 15

## INTERNATIONAL SEARCH REPORT

| | International application No. |
|---|---|
| | PCT/JP2013/051237 |

### A. CLASSIFICATION OF SUBJECT MATTER
*H04L7/033*(2006.01)i, *H04L7/00*(2006.01)i

According to International Patent Classification (IPC) or to both national classification and IPC

### B. FIELDS SEARCHED

Minimum documentation searched (classification system followed by classification symbols)
H04L7/033, H04L7/00

Documentation searched other than minimum documentation to the extent that such documents are included in the fields searched
| Jitsuyo Shinan Koho | 1922-1996 | Jitsuyo Shinan Toroku Koho | 1996-2013 |
|---|---|---|---|
| Kokai Jitsuyo Shinan Koho | 1971-2013 | Toroku Jitsuyo Shinan Koho | 1994-2013 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>A | JP 2007-282093 A (Oki Electric Industry Co., Ltd.),<br>25 October 2007 (25.10.2007),<br>paragraphs [0025], [0026]; fig. 3<br>(Family: none) | 1,8-10<br>2-7 |
| A | JP 2010-109586 A (OKI Networks Co., Ltd.),<br>13 May 2010 (13.05.2010),<br>entire text<br>(Family: none) | 1-10 |
| A | JP 2010-232845 A (Sony Corp.),<br>14 October 2010 (14.10.2010),<br>entire text<br>& US 2010/0250781 A1 & CN 101848075 A | 1-10 |

☐ Further documents are listed in the continuation of Box C.　　☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 26 February, 2013 (26.02.13) | 05 March, 2013 (05.03.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**EP 2 811 684 A1**

**Patent documents cited in the description**

- JP 2004304809 A
- JP 2010232845 A